**Europäisches Patentamt**

**European Patent Office**

**Office européen des brevets**

(19)

(11) Veröffentlichungsnummer : **0 411 381 B1**

(12) # EUROPÄISCHE PATENTSCHRIFT

(45) Veröffentlichungstag der Patentschrift :
**02.02.94 Patentblatt 94/05**

(51) Int. Cl.$^5$ : **C01B 25/40**

(21) Anmeldenummer : **90113652.3**

(22) Anmeldetag : **17.07.90**

(54) **Verfahren zur Herstellung von Ammoniumpolyphosphat, welches eine niedrigviskose wässrige Suspension ergibt.**

Die Akte enthält technische Angaben, die nach dem Eingang der Anmeldung eingereicht wurden und die nicht in dieser Patentschrift enthalten sind.

(30) Priorität : **03.08.89 DE 3925675**

(43) Veröffentlichungstag der Anmeldung :
**06.02.91 Patentblatt 91/06**

(45) Bekanntmachung des Hinweises auf die Patenterteilung :
**02.02.94 Patentblatt 94/05**

(84) Benannte Vertragsstaaten :
**AT BE CH DE DK ES FR GB IT LI NL SE**

(56) Entgegenhaltungen :
**EP-A- 0 088 265**
**DE-B- 1 767 205**
**DE-B- 2 330 174**

(73) Patentinhaber : **HOECHST AKTIENGESELLSCHAFT**
**Brüningstrasse 64**
**D-65929 Frankfurt (DE)**

(72) Erfinder : **Staffel, Thomas, Dr.**
**Gennerstrasse 153**
**D-5030 Hürth (DE)**
Erfinder : **Adrian, Renate**
**Grosse Ölbruchstrasse 29**
**D-5030 Hürth (DE)**

## Beschreibung

Die Erfindung betrifft ein Verfahren zur Herstellung von im wesentlichen wasserunlöslichen, kettenförmigen Ammoniumpolyphosphaten der allgemeinen Formel $(NH_4PO_3)_n$, in der n einer Zahl von 1o bis 1ooo entspricht, durch Erhitzen von Ammoniumorthophosphat und Phosphorpentoxid in Gegenwart von gasförmigem Ammoniak und unter gleichzeitiger Bewegung des Reaktionsgutes.

Gemäß der US-A-3,978,195 kann Ammoniumpolyphosphat durch Erhitzen etwa äquivalenter Mengen von Ammoniumorthophosphat und Phosphorpentoxid auf Temperaturen zwischen 17o und 35o °C in Gegenwart von gasförmigem Ammoniak hergestellt werden. Das Erhitzen wird unter ständigem und gleichzeitigem Mischen, Kneten und Zerkleinern des Reaktionsgutes so durchgeführt, daß während der ersten Erhitzungsphase die Reaktanten in teigigem Zustand mit geringer Mischintensität umgesetzt und in einer anschließenden Temperphase mit großer Mischintensität in einer Art Wirbelbett nachbehandelt werden.

Das so hergestellte Ammoniumpolyphosphat ist ein im wesentlichen wasserunlösliches, kettenförmiges Ammoniumpolyphosphat der allgemeinen Formel $(NH_4PO_3)_n$, in der n einer Zahl von 1o bis 1ooo entspricht.

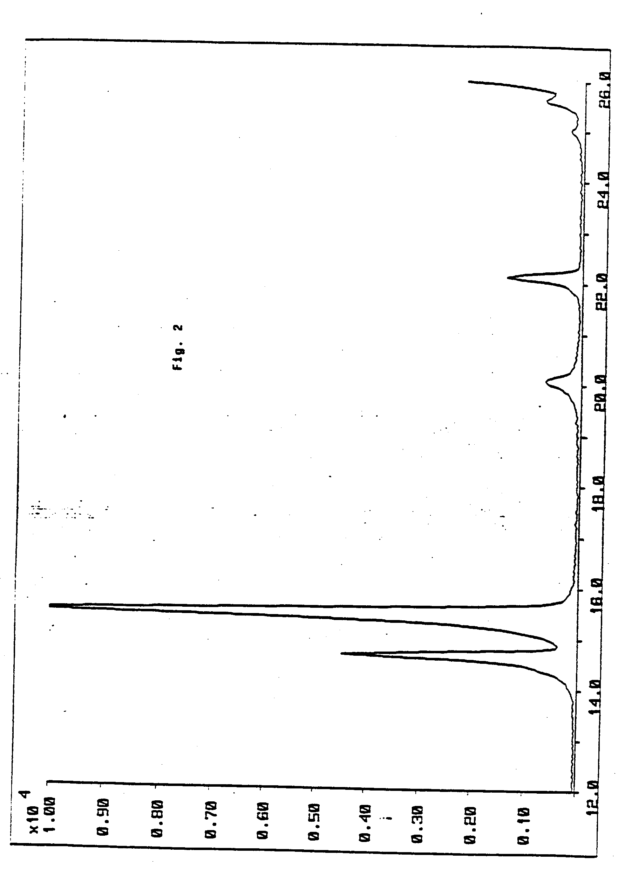

Gemäß der EP-A-0 088 265 kann Ammoniumpolyphosphat der Phase II mit dem in Fig. 2 angegebenen Röntgendiagramm durch Erhitzen von Ammoniumorthophosphat und Phosphorpentoxid in Ammoniak-Atmosphäre hergestellt werden, wenn in einem 1. Schritt ein Teil des Gesamtammoniaks umgesetzt wird, dann eine Temperzeit eingeschoben und danach das restliche Ammoniak mit dem Tempergut umgesetzt wird.

Bei verschiedenen Anwendungszwecken hat dieses Ammoniumpolyphosphat den Nachteil, daß es in wäßriger Phase ein hochviskoses Gel bildet.

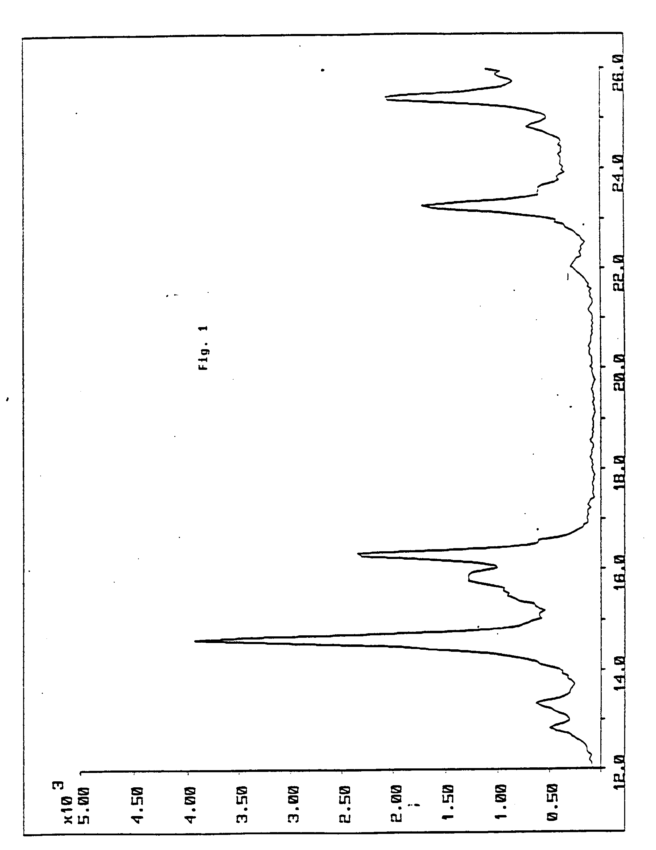

Es war daher die Aufgabe gestellt, ein Verfahren zur Herstellung von im wesentlichen wasserunlöslichen, kettenförmigen Ammoniumpolyphosphaten der allgemeinen Formel $(NH_4PO_3)_n$, in der n einer Zahl von 1o bis 1ooo entspricht, durch Erhitzen von Diammoniumorthophosphat und Phosphorpentoxid in Gegenwart von gasförmigem Ammoniak und unter gleichzeitiger Bewegung des Reaktionsgutes, dessen bei 6o °C bereitete 2o gew%ige wäßrige Suspension bei 2o °C eine Viskosität von weniger als 1oo mPA . s aufweist und die Ammoniumpolyphosphate durch die Röntgenbeugungslinien der Figur 1 charakterisiert sind anzugeben.

Überraschenderweise wurde nun gefunden, daß die Herstellung von einem solchen Ammoniumpolyphosphat, welches eine niedrigviskose wäßrige Suspension ergibt, nach den bekannten Verfahren gemäß der US-A-3,978,195 und EP-A-0 088 265 gelingt, wenn die Verfahrensweise in wesentlicher Weise abgeändert wird.

Das erfindungsgemäße Verfahren ist dadurch gekennzeichnet, daß man die Reaktionsmischung aus Diammoniumorthophosphat und Phosphorpentoxid mit hoher Mischintensität in krümeliger Phase bei einer Temperatur von 15o bis 3oo °C über einen Zeitraum von 1o bis 3o min abreagieren läßt und danach das Reaktionsgut in bekannter Weise über einen Zeitraum von 5o bis 2oo min, vorzugsweise von 1oo bis 12o min, bei einer Temperatur von 200 bis 3oo °C, vorzugsweise von 25o bis 28o °C, unter Ammoniakatmosphäre tempert.

Das erfindungsgemäße Verfahren kann weiterhin wahlweise auch noch dadurch ausgestaltet sein, daß
a) ein molares Verhältnis von $P_2O_5 : (NH_4)_x H_{3-x} PO_4 = 1 : 0,3$ bis 1 als Reaktionsmischung eingesetzt wird;
b) der Reaktionsmischung o,1 bis o,5 kg Harnstoff pro 1 kg Phosphorpentoxid beigemischt wird;
c) das Verfahren in einem Knetreaktor durchgeführt wird;
d) die wärmeabführenden Flächen des Knetreaktors so groß bemessen sind, daß die Reaktionsmischung auf einer Endtemperatur von höchstens 300°C gehalten wird;
e) die Reaktionsmischung auf eine Anfangsreaktionstemperatur von 130 bis 170°C, vorzugsweise 140 bis 160°C, vorgeheizt wird;
f) die Reaktionsmischung mit bis zu 50 Gew% Fertigprodukt gemagert wird;
g) die Temperung des Reaktionsgutes nach einem Zerkleinerungsvorgang auf eine mittlere Kornfeinheit von 50 bis 200 μm bei Temperaturen von 200 bis 300°C unter Ammoniakatmosphäre erfolgt;
h) die Temperung in einem Drehrohrofen erfolgt.

Das erfindungsgemäße Ammoniumpolyphosphat eignet sich besonders für die Einarbeitung als Flammschutzmittel in Intumeszenzfarben, Thermoplaste, PU-Schäume und Holzspanplatten.

Speziell für die Verwendung in Intumeszenzfarben ist das rheologische Verhalten der Suspension von ausschlaggebender Bedeutung. Eine zu hohe Viskosität der Intumeszenzfarbe durch Gel bildendes Ammoniumpolyphosphat bringt verarbeitungstechnische Schwierigkeiten mit sich, die nur dadurch gelöst werden können, daß in die Intumeszenzfarbe wenig Flammschutzmittel eingearbeitet wird. Für diesen Fall müssen dann für einen wirksamen Flammschutz mehrere Intumeszenzfarbanstriche aufgebracht werden.

Diese Schwierigkeit entfällt beim Einsatz des erfindungsgemäß hergestellten Ammoniumpolyphosphats.

Mit dem erfindungsgemäßen Verfahren wird nunmehr ein Ammoniumpolyphosphat bereitgestellt, welches eine niedrigviskose wäßrige Suspension ergibt, weitgehend wasserunlöslich ist und aus preiswerten Ausgangsmaterialien mit geringen Kosten herstellbar ist.

2

Entscheidend für das Verfahren sind die Einhaltung einer kurzen Reaktionsdauer bei der Umsetzung von Phosphorpentoxid, Ammoniumorthophosphat und Ammoniak und die gute Abführung der Reaktionswärme, wobei darauf zu achten ist, daß sich die Reaktionsmischung nicht über eine Temperatur von 300°C erhitzt.

Die Raum-Zeit-Ausbeute des Knetreaktors kann noch dadurch erhöht werden, daß in den Knetreaktor gegen Ende der Reaktionsphase weitere Reaktionsmischung eindosiert wird.

Als Knetreaktor wurden folgende Apparate mit Erfolg getestet:

1) Doppelwellenreaktor der Firma Linden, Marienheide, Typ K2N-10; Wärmeaustauschfläche 1500 cm$^2$; Reaktionsvolumen 7,5 l.

2) Einwellen-Knetreaktor der Firma Krauss-Maffei, München, Typ Reactotherm, Wärmeaustauschfläche 2800 cm$^2$; Reaktionsvolumen 5 l.

3) Exzentermischer der Firma Hobart, Offenburg, Typ A 200; Wärmeaustauschfläche 4120 cm$^2$; Reaktionsvolumen 25 l.

Als Fig. 1 ist das Röntgendiagramm des erfindungsgemäßen Ammoniumpolyphosphats und als Fig. 2 das Röntgendiagramm des Ammoniumpolyphosphats, welches gemäß der US-A-3,978,195 hergestellt wurde, beigefügt (jetziges Vergleichsbeispiel 1).

Bestimmung des pH-Wertes und der Säurezahl:

10 g Ammoniumpolyphosphat werden in 150 g Wasser suspendiert. Die $p_H$-Wert-Messung erfolgt mittels einer Glaselektrode. Die Säurezahl wird durch Titration bis $p_H = 7$ mit 0,1 n KOH ermittelt.

Bestimmung der Viskosität:

Die Viskosität wurde nach dem Scheiben-System gemessen, vgl. G. Schramm, Einführung in praktische Viskosimetrie, 4. Auflage, Karlsruhe 1987, Verlag Gebr. Haake.

Vor der Bestimmung der Viskosität wurde zunächst Wasser auf 60°C erwärmt, anschließend damit eine 20 gew%ige Suspension unter Einrühren von Ammoniumpolyphosphat hergestellt. Nach der Abkühlung auf 20°C wurde die Viskosität der Suspension mit einem Brookfield-Viskosimeter bestimmt.

Die nachfolgenden Beispiele sollen das erfindungsgemäße Verfahren noch weiter erläutern.

## Vergleichsbeispiel 1

Das Beispiel 1 der US-A-3,978,195 wurde nachgearbeitet. Eine Mischung aus 2 640 g feinteiligem $(NH_4)_2HPO_4$ und 2 840 g feinteiligem $P_4O_{10}$ wurde in einem auf 150°C aufgeheizten Doppelwellenmischer der Firma Linden, Typ K2N-10 mit sigmaförmigen Knetschaufeln gefüllt und 1 Stunde lang 400 l $NH_3$ und eine weitere Stunde lang 100 l $NH_3$ eingeleitet. Der Doppelwellenmischer lief mit einer Geschwindigkeit von 30 U/min in der 1.Stunde. Nach 1 Stunde wurde die Geschwindigkeit auf 150 U/min erhöht. Das Röntgendiagramm des erhaltenen Ammoniumpolyphosphats ist in Fig. 2 dargestellt.

Die Produktwerte sind der Tabelle zu entnehmen.

## Beispiel 2

Eine Mischung aus 1160 g feinteiligem $(NH_4)_2HPO_4$ und 1220 g feinteiligem $P_4O_{10}$ werden in den mit 150 U/min laufenden Doppelwellenmischer, Typ K2N-10, dosiert und auf 150°C aufgeheizt. Nach Einleiten des Ammoniaks setzt die Reaktion sehr spontan ein. Die Reaktionsmischung erhitzt sich hierbei auf 280°C. Die Reaktionsmischung nimmt einen krümeligen Zustand an. Nach 20 min geht der krümelige Zustand in einen pulverigen Zustand über. Die Reaktionsmischung wird jetzt noch weitere 100 min bei 280 bis 250°C getempert.

Das Röntgendiagramm des erhaltenen Ammoniumpolyphosphats ist in Fig. 1 dargestellt.

Die Produktwerte sind in der Tabelle notiert.

## Beispiel 3

Eine Mischung aus 1320 g feinteiligem $(NH_4)_2HPO_4$ und 1420 g feinteiligem $P_4O_{10}$ werden in einen mit 70/280 U/min laufenden Exzentermischer der Firma Hobart, Typ A 200, dosiert. Nach dem Einleiten von Ammoniak setzt die Reaktion schnell ein. Die Reaktionsmischung erhitzt sich hierbei auf 250°C und geht hierbei in einen krümeligen Zustand über. Nach einer Reaktionszeit von 25 min wird das grobe Granulat aus dem Exzentermischer genommen und in einer Mühle auf einen mittleren Teilchendurchmesser von 50 bis 200 $\mu$m gemahlen und im Drehrohrofen bei 280°C 100 min getempert.

Die Produktwerte sind in der Tabelle zusammengefaßt.

**Beispiel 4**

Eine Mischung aus 800 g feinteiligem $(NH_4)_2HPO_4$, 1000 g feinteiligem $P_4O_{10}$ und 210 g Harnstoff werden in den mit 150 U/min laufenden Doppelwellenmischer, Typ K2N-10, dosiert und auf 150°C aufgeheizt. Nach Einleiten des Ammoniaks erhitzt sich die Reaktionsmischung unter starker Verwirbelung der Reaktionsmischung auf 295°C. Die Stromaufnahme des Doppelwellenmischers stieg stark an und blieb über einen Zeitraum von 10 min hoch. Nach diesem Zeitraum fiel die Stromaufnahme ab und das Reaktionsprodukt ging von dem krümeligen Zustand in einen pulverförmigen Zustand über. Das Reaktionsprodukt wurde anschließend noch 100 min bei 280°C getempert.
Die Produktwerte sind in die Tabelle aufgenommen.

**Beispiel 5**

Eine Mischung aus 1160 g feinteiligem $(NH_4)_2HPO_4$, 1250 g feinteiligem $P_4O_{10}$ und 500 g feinteiligem Fertigprodukt des Beispiels 2 werden in den mit 150 U/min laufenden Doppelwellenmischer, Typ K2N-10 dosiert und auf 150°C aufgeheizt. Nach Einleiten des Ammoniaks erhitzt sich die Reaktionsmischung auf 240°C. Die Reaktionsmischung verbleibt in einem pulverförmigen Zustand, wobei jedoch die Teilchengröße in der Anfangsreaktionsphase durch Agglomeratbildung vergrößert wird.
Nach 20 min Reaktionszeit gehen die Agglomerate in einen feinteiligen Feststoff über. Das Produkt wird noch 100 min bei 280 bis 260°C getempert.
Die Produktwerte sind in der Tabelle zusammengestellt.

## Tabelle

| Beispiel Nr. | 1 | 2 | 3 | 4 | 5 |
|---|---|---|---|---|---|
| pH-Wert | 5,1 | 6,6 | 6,6 | 4,9 | 6,7 |
| Säurezahl (mg KOH/g) | 0,75 | 0,2 | 0,1 | 2,5 | 0,2 |
| wasserlösliche Anteile (%) | 3,4 | 3,4 | 4,1 | 3,4 | 3,4 |
| Viskosität mPa . s | 800 | 50 | 77 | 55 | 30 |

**Patentansprüche**

1. Verfahren zur Herstellung von im wesentlichen wasserunloslichen, kettenförmigen Ammoniumpolyphosphaten der allgemeinen Formel $(NH_4PO_3)_n$, in der n einer Zahl von 1o bis 1ooo entspricht, durch Erhitzen von Diammoniumorthophosphat und Phosphorpentoxid in Gegenwart von gasförmigem Ammoniak und unter gleichzeitiger Bewegung des Reaktionsgutes, dessen bei 6o °C bereitete 2o gew%ige wäßrige Suspension bei 2o °C eine Viskosität von weniger als 1oo mPA . s aufweist und die Ammoniumpolyphosphate durch die Röntgenbeugungslinien der Figur 1

charakterisiert sind, dadurch gekennzeichnet, daß man die Reaktionsmischung aus Diammoniumorthophosphat und Phosphorpentoxid mit hoher Mischintensität in krümeliger Phase bei einer Temperatur von 150 bis 3oo °C, über einen Zeitraum von lo bis 3o min, abreagieren läßt und danach das Reaktionsgut in bekannter Weise über einen Zeitraum von 5o bis 2oo min, vorzugsweise von 1oo bis 12o min, bei einer Temperatur von 200 bis 3oo °C, vorzugsweise von 25o bis 28o °C, unter Ammoniakatmosphäre tempert.

2.   Verfahren nach Anspruch 1, dadurch gekennzeichnet, daß ein molares Verhältnis von $P_2O_5 : (NH_4)_xH_{3-x}PO_4 = 1 : (0,3$ bis 1) als Reaktionsmischung eingesetzt wird.

3.   Verfahren nach Anspruch 1 oder 2, dadurch gekennzeichnet, daß der Reaktionsmischung 0,1 bis 0,5 kg Harnstoff pro 1 kg Phosphorpentoxid beigemischt wird.

4.   Verfahren nach einem der Ansprüche 1 bis 3, dadurch gekennzeichnet, daß das Verfahren in einem Knetreaktor durchgeführt wird.

5.   Verfahren nach Anspruch 4, dadurch gekennzeichnet, daß die wärmeabführenden Flächen des Knetreaktors so groß bemessen sind, daß die Reaktionsmischung auf einer Endtemperatur von höchstens 300°C gehalten wird.

6.   Verfahren nach einem der Ansprüche 1 bis 5, dadurch ge kennzeichnet, daß die Reaktionsmischung auf eine Anfangsreaktionstemperatur von 130 bis 170°C, vorzugsweise 140 bis 160°C, vorgeheizt wird.

7.   Verfahren nach einem der Ansprüche 1 bis 6, dadurch gekennzeichnet, daß die Reaktionsmischung mit bis zu 50 Gew% Fertigprodukt gemagert wird.

8.   Verfahren nach einem der Ansprüche 1 bis 7, dadurch gekennzeichnet, daß die Temperung des Reaktionsgutes nach einem Zerkleinerungsvorgang auf eine mittlere Kornfeinheit von 50 bis 200 µm bei Temperaturen von 200 bis 300°C unter Ammoniakatmosphäre erfolgt.

9.   Verfahren nach Anspruch 8, dadurch gekennzeichnet, daß die Temperung in einem Drehrohrofen erfolgt.

## Claims

1.   A process for producing an essentially water-insoluble, chain-type ammonium polyphosphate of the general formula $(NH_4PO_3)_n$, in which n is a number from 10 to 1,000, by heating diammonium orthophosphate and phosphorus pentoxide in the presence of gaseous ammonia with simultaneous agitation of the reaction material, whose 20% by weight aqueous suspension prepared at 60°C has a viscosity of less than 100 mPa.s at 20°C and the ammonium polyphosphates are characterized by the X-ray diffraction lines in Figure 1, wherein, the reaction mixture of diammonium orthophosphate and phosphorus pentoxide is allowed to react fully at a high mixing intensity in a crumbly phase at a temperature from 150 to 300°C over a period of from 10 to 30 minutes and then the reaction material is heat-treated in a known manner over a period of from 50 to 200 minutes, preferably from 100 to 120 minutes, at a temperature from 200 to 300°C, preferably from 250 to 280°C, under an ammonia atmosphere.

2.   The process as claimed in claim 1, wherein a molar ratio of $P_2O_5 : (NH_4)_xH_{3-x}PO_4 = 1 : 0.3$ to 1 is used in the reaction mixture.

3.   The process as claimed in claim 1 or 2, wherein 0.1 to 0.5 kg of urea per 1 kg of phosphorus pentoxide is admixed to the reaction mixture.

4.   The process as claimed in any of claims 1 to 3, which is carried out in a kneader reactor.

5.   The process as claimed in claim 4, wherein the heat removal surface areas of the kneader reactor are sized such that the reaction mixture is held at an end temperature of at most 300°C.

6.   The process as claimed in claims 1 to 5, wherein the reaction mixture is preheated to an initial reaction temperature from 130 to 170°C, preferably 140 to 160°C.

7.   The process as claimed in any of claims 1 to 6, wherein the reaction mixture is diluted with up to 50% by weight of finished product.

8. The process as claimed in any of claims 1 to 7, wherein the heat treatment of the reaction material, after it has been comminuted to a mean particle size of from 50 to 200 $\mu$m, is carried out at temperatures from 200 to 300°C under an ammonia atmosphere.

9. The process as claimed in claim 8, wherein the heat treatment is carried out in a rotary kiln.

## Revendications

1. Procédé de préparation de polyphosphates d'ammonium de forme caténaire, essentiellement insolubles dans l'eau, de formule générale $(NH_4PO_3)_n$ dans laquelle n est un nombre allant de 10 à 1 000, par chauffage de l'orthophosphate diammonique et du pentoxyde de phosphore en présence d'ammoniac gazeux, le mélange de réaction étant maintenu simultanément en mouvement, les polyphosphates d'ammonium ainsi obtenus donnant des suspensions aqueuses à 20 % en poids, préparées à 60°C, qui ont à 20°C une viscosité inférieure à 100 mPa.s et se caractérisant par les raies de diffraction de rayons X de la figure 1, caractérisé en ce qu'on laisse réagir complètement le mélange d'orthophosphate diammonique et de pentoxyde de phosphore sous haute intensité de mélange en phase grumeleuse à une température de 150 à 300°C pendant une durée de 10 à 30 min, puis on cuit le produit de réaction de manière connue dans une durée de 50 à 200 min, de préférence de 100 à 120 min, à une température de 200 à 300°C, de préférence de 250 à 280°C en atmosphère d'ammoniac.

2. Procédé selon revendication 1, caractérisé en ce que l'on règle un rapport molaire $P_2O_5 : (NH_4)_xH_{3-x}PO_4$ de 1:0,3 à 1 dans le mélange de réaction.

3. Procédé selon revendication 1 ou 2, caractérisé en ce que l'on ajoute au mélange de réaction et on mélange 0,1 à 0,5 kg d'urée par kg de pentoxyde de phosphore.

4. Procédé selon une des revendications 1 à 3, caractérisé en ce que l'on opère dans un réacteur malaxeur.

5. Procédé selon revendication 4, caractérisé en ce que les surfaces d'évacuation de chaleur du réacteur malaxeur sont suffisantes pour que le mélange de réaction soit maintenu à une température finale de 300°C au maximum.

6. Procédé selon une des revendications 1 à 5, caractérisé en ce que le mélange de réaction est porté au préalable à une température initiale de réaction de 130 à 170°C, de préférence de 140 à 160°C.

7. Procédé selon une des revendications 1 à 6, caractérisé en ce que l'on dilue le mélange de réaction par du produit fini en proportions allant jusqu'à 50 % en poids.

8. Procédé selon une des revendications 1 à 7, caractérisé en ce que la cuisson du produit de réaction est réalisée après une opération de broyage jusqu'à une finesse moyenne de grain de 50 à 200 $\mu$m à des températures de 200 à 300°C en atmosphère d'ammoniac.

9. Procédé selon revendication 8, caractérisé en ce que la cuisson est réalisée dans un four tubulaire rotatif.

Fig. 1

Fig. 2

EP 0 411 381 B1